# EUROPÄISCHE PATENTSCHRIFT

(11) **EP 1 871 609 B1**
(45) Veröffentlichungstag und Bekanntmachung des Hinweises auf die Patenterteilung: **28.12.2011**
(21) Anmeldenummer: 06722539.1
(22) Anmeldetag: 01.03.2006
(51) Int. Cl.: B41J 3/28

(54) **DRUCKER FÜR SPARBÜCHER MIT MAGNETSTREIFEN**
PRINTER FOR SAVINGS BOOKS WITH MAGNETIC STRIPS
IMPRIMANTE POUR LIVRETS DE CAISSE D'EPARGNE A PISTE MAGNETIQUE

(30) Priorität: 11.03.2005 DE 102005021759
(43) Veröffentlichungstag der Anmeldung: 02.01.2008
(73) Patentinhaber: Wincor Nixdorf International GmbH, 33106 Paderborn (DE)
(72) Erfinder: DUESTERHUS, Richard, 33106 Paderborn (DE); WIESBROCK, Wilfried, 33397 Rietberg (DE); DREES, Karl, 33142 Bueren (DE)
(86) Internationale Anmeldenummer: PCT/DE2006/000368
(87) Internationale Veröffentlichungsnummer: WO 2006/097068

(56) Entgegenhaltungen:
- EP-A- 0 707 971
- DE-C1- 19 609 886
- US-A- 5 949 058
- PATENT ABSTRACTS OF JAPAN Bd. 007, Nr. 179 (M-234), 9. August 1983 (1983-08-09) & JP 58 082778 A (TOKYO SHIBAURA DENKI KK), 18. Mai 1983 (1983-05-18)

## Beschreibung

Die Erfindung betrifft einen Drucker für Sparbücher mit einem mit Daten versehenen Magnetstreifen nach dem Oberbegriff des Anspruchs 1.

Ein derartiger Drucker dient zum Bedrucken von Sparbüchern und zum Bearbeiten von auf dem Magnetstreifen des Sparbuchs aufgezeichneter Daten. Unter Sparbüchern sind sowohl mehrblättrige Sparbücher als auch einblättrige Sparkarten zu verstehen, die jeweils wenigstens einen Magnetstreifen aufweisen.

Gattungsgemäße Drucker sind bekannt, so beispielsweise aus der DE 198 40 997 A1. Konstruktive Varianten und Baugruppen, die bei gattungsgemäßen Druckern einsetzbar sind, offenbaren zudem die EP 0 690 792 B1, die DE 199 45 343 A 1 und die EP 0 688 453 B1.

Ein Drucker für Sparbücher ist mit einer Transportbahn mit Transport- und Andruckrollen zum Transport der Sparbücher durch den Drucker, einem Druckkopf zum Bedrucken des Sparbuches und einer Magnetkopfanordnung zum Bearbeiten des Magnetstreifens ausgestattet. Bei den Informationen auf dem Magnetstreifen handelt es sich um die Kontonummer, den Kontostand sowie Positionsangaben im Sparbuch wie beispielsweise die neu zu beschreibende Zeile. Diese Informationen werden vom Magnetkopf ausgelesen bzw. eingeschrieben.

Eine Magnetkopfanordnung für einen Sparbuchdrucker ist aus der DE 196 09 886 C1 bekannt. Die in dieser Schrift offenbarte Vorrichtung umfasst einen Magnetkopf, der auf einem senkrecht zur Transportrichtung des Sparbuchs ausgerichteten Schlitten verschieblich geführt ist, um den ebenfalls senkrecht zur Transportrichtung ausgerichteten Magnetstreifen zu bearbeiten.

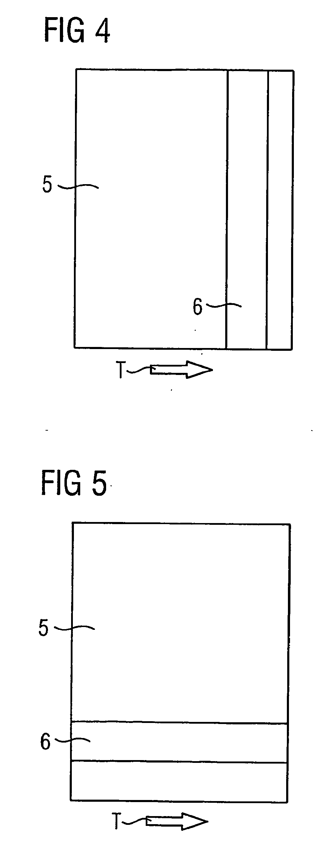

Neben Sparbüchern mit senkrecht angeordneten Magnetstreifen bezogen auf die Transportrichtung des Sparbuches sind auch Sparbücher mit parallel zur Transportrichtung ausgerichteten Magnetstreifen bekannt (Fig. 5).

Da die Magnetköpfe bei bekannten Sparbuchdruckern nur zum Bearbeiten senkrecht zur Transportrichtung ausgerichteter Magnetstreifen ausgelegt sind, sind die gängigen Sparbuchdrucker zum Bearbeiten von Sparbüchern mit parallel ausgerichteten Magnetstreifen nicht geeignet.

Aus dem Dokument EP 0 707 971 A1 ist bereits ein Drucker mit einer Magnetkopfanordnung bekannt, bei der Magnetkopf zum Verarbeiten von Daten auf einem parallel zur Transportrichtung ausgerichteten Magnetstreifen des Sparbuchs stationär angeordnet ist.

Der Erfindung liegt ausgehend von diesem Problem die Aufgabe zu Grunde, den gattungsgemäßen Sparbuchdrucker gemäß Oberbegriff von Anspruch 1 derart weiterzuentwickeln, dass mit ihm sowohl Sparbücher, deren Magnetstreifen parallel zur Transportrichtung des Sparbuchs durch den Drucker ausgerichtet sind, als auch Sparbücher , deren Magnetstreifen senkrecht zur Transportrichtung des Sparbuchs durch den Drucker ausgerichtet sind, auf konstruktiv einfache Weise bearbeitbar sind.

Die Erfindung löst diese Aufgabe durch den Gegenstand des Anspruchs 1.

Danach ist der Magnetkopf der Magnetkopfanordnung zum Verarbeiten von Daten auf einem parallel zur Transportrichtung ausgerichteten Magnetstreifen des Sparbuchs stationär angeordnet. Da das Sparbuch beim Transport durch den Drucker am stationär angeordneten Magnetkopf vorbei bewegt wird, erfolgt das Auslesen der Daten während der Bewegung des Sparbuches am Magnetkopf vorbei.

Zusätzlich zum stationär angeordneten Magnetkopf, der sehr kostengünstig realisierbar ist, ist ein zweiter Magnetkopf vorgesehen, der senkrecht zur Transportrichtung verschieblich geführt ist zum Verarbeiten von Daten auf einem senkrecht zur Transportrichtung des Sparbuchs ausgerichteten Magnetstreifen.

Auf diese Weise ist der Sparbuchdrucker zum Bearbeiten beider Sparbuchformate - mit horizontalem und vertikalem Magnetstreifen - geeignet und damit universell einsetzbar.

Vorteilhafte Ausgestaltungen sind den Unteransprüchen zu entnehmen.

Nachfolgend wird die Erfindung mit Bezug auf die Zeichnung anhand eines Ausführungsbeispiels näher beschrieben. Es zeigen:
- Fig. 1: eine perspektivische Ansicht eines Transportbahnabschnittes eines erfindungsgemäßen Sparbuchdruckers mit aufgeklapptem Druckergehäuse;

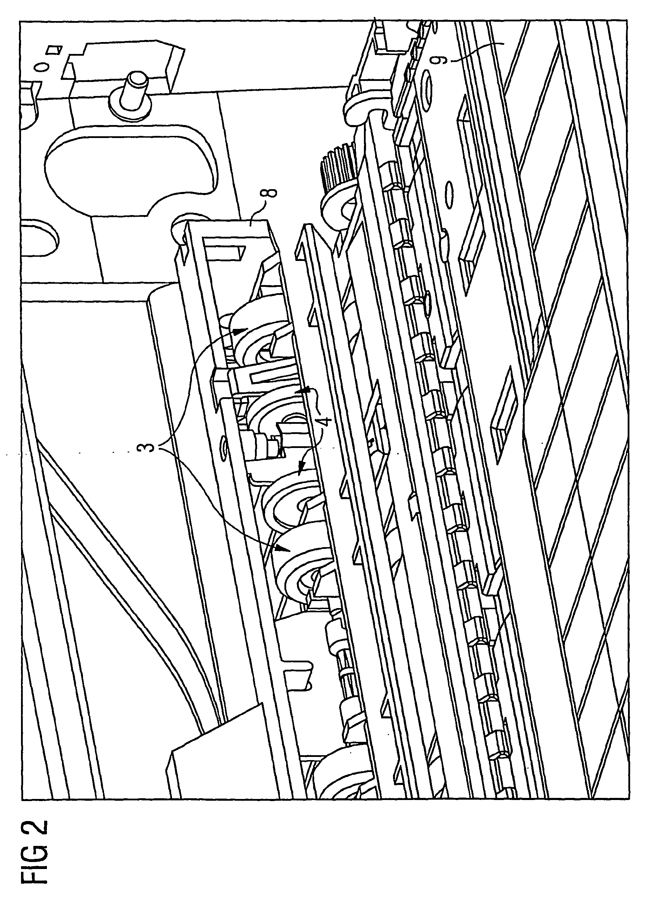

- Fig. 2: eine vergrößerte Ansicht des Transportbahnabschnittes aus Fig. 1 mit einem in die Betriebsstellung heruntergeklapptem Gehäuseoberteil;

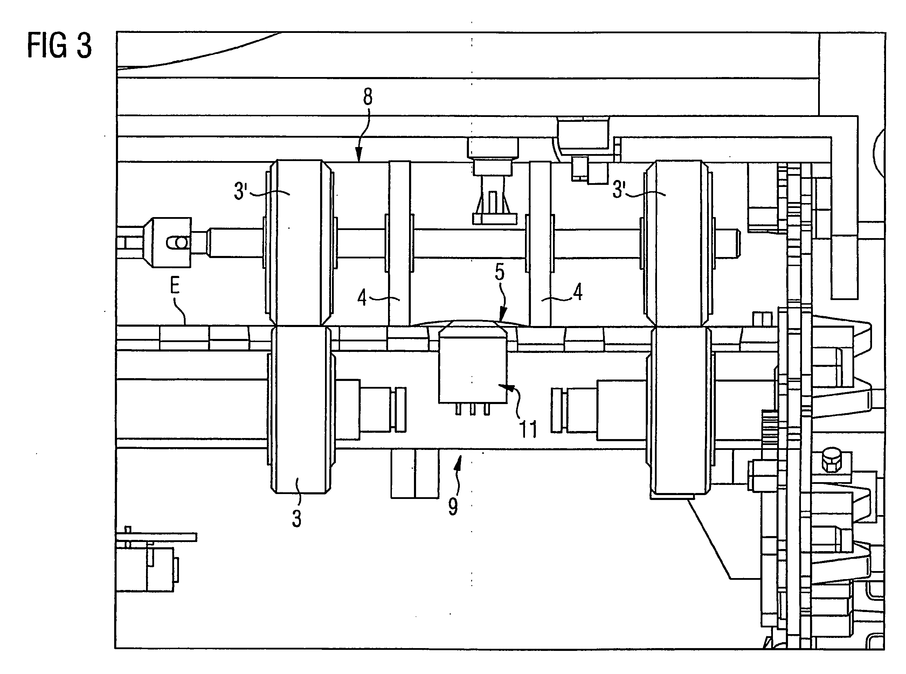

- Fig. 3: einen Teilschnitt durch die Anordnung der Fig. 1 und Fig. 2;
- Fig. 4: eine Draufsicht auf ein Sparbuch mit einem bezogen auf die Transportrichtung T senkrecht ausgerichteten Magnetstreifen;
- Fig. 5: eine Draufsicht auf ein Sparbuch mit einem bezogen auf die Transportrichtung T parallel ausgerichteten Magnetstreifen.

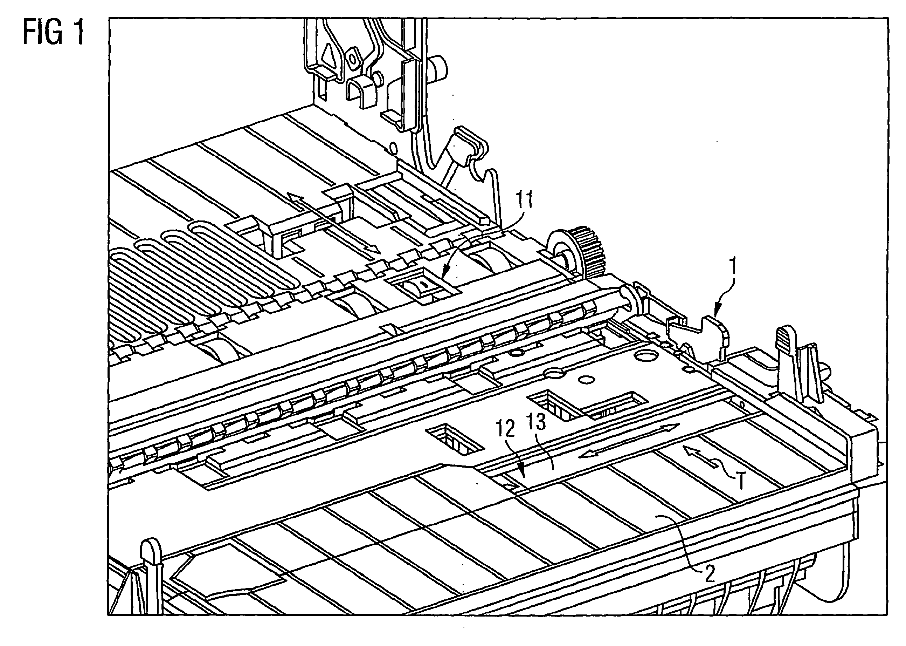

Fig. 1 zeigt eine Teilansicht eines Sparbuchdruckers 1, der bis auf den Bereich der Magnetkopfanordnung gemäß der DE 198 40 997 A1 ausgebildet sein kann. Der Drucker weist eine Transportbahn 2 mit Transportrollen 3 und Andruckrollen 4 zum Transport eines Sparbuchs 5 (Fig. 4, 5) durch den Drucker auf. Das in Fig. 4 dargestellte Sparbuch 5 hat einen zur Transportrichtung T senkrecht ausgerichteten Magnetstreifen 6, während bei dem in Fig. 5 dargestellten Sparbuch der Magnetstreifen 7 bezogen auf die Transportrichtung T parallel ausgerichtet ist.

Der Transport der Sparbücher 4, 5 auf der Transportbahn 2 durch den Sparbuchdrucker erfolgt mittels der Transportrollen 3 und der Andruckrollen 4. Dabei wirken zwei erste Transportrollen 3 in einem ersten Druckergehäuseteil 8 und zwei korrespondierende, gegenüberliegend zu den ersten Transportrollen 3 angeordnete Transportrollen 3' in einem zweiten Druckergehäuseteil 9 zusammen, die zum Transport der Sparbücher 5 durch den Drucker 1 ausgelegt sind. Zwischen den jeweils zwei oberen und unteren Transportrollen 3, 3' sind hier beispielhaft zwei Andruckrollen 4 angeordnet, die das Sparbuch 5 im mittleren Bereich niederdrücken.

Zum Bearbeiten von Daten auf einem parallel zur Transportrichtung angeordneten Magnetstreifen 7 dient ein stationär angeordneter Magnetkopf 11. Der Magnetkopf 11 ist stationär zwischen den beiden Andruckrollen 4 angeordnet, also in einem Bereich, in dem das Sparbuch niedergedrückt wird, wodurch ein besonders zuverlässiges Bearbeiten der Daten auf dem Magnetstreifen 7 gewährleistet ist. Der Magnetkopf 11 kann sich bis über die Ebene E der Transportbahn 2 des Sparbuches hinaus erstrecken, um eine sichere Anlage des Sparbuchs 5 am stationären Magnetkopf 11 zu gewährleisten. Da das Sparbuch 5 in Transportrichtung T durch den Drucker transportiert wird, kann der Magnetkopf 11 stationär ausgebildet sein. Der Magnetstreifen 7 bewegt sich während der Transportbewegung des Sparbuchs 5 am Magnetkopf 11 vorbei.

Es kann eine weitere Magnetkopfanordnung 12 vorgesehen sein, die zum Auslesen von senkrecht zur Transportrichtung T des Sparbuches ausgerichteter Magnetstreifen 6 dient. Diese Magnetfeldanordnung 12 ist vorzugsweise auf einem Schlitten verschieblich geführt. Derartige Drucker mit zwei Magnetkopfanordnungen 11, 12 können sowohl für die Bearbeitung von Magnetstreifen 6, die senkrecht zur Transportrichtung T ausgerichtet sind, als auch für die Bearbeitung von Sparbüchern 5 mit parallel zur Transportrichtung T ausgerichteten Magnetstreifen 7 eingesetzt werden.

### Bezugszeichen

- Sparbuchdrucker: 1
- Transportbahn: 2
- Transportrollen: 3,3'
- Andruckrollen: 4
- Sparbücher: 5
- Magnetstreifen: 6, 7
- erstes Druckergehäuseteil: 8
- zweites Druckergehäuseteil: 9
- Magnetkopfanordnungen: 11, 12
- Transportrichtung: T
- Ebene: E .

## Patentansprüche

1. Drucker für Sparbücher (5) mit einem Magnetstreifen (7) mit
- einer Transportbahn (2) mit Transportrollen (3) zum Transport des Sparbuches (5) und
- zumindest einer Magnetkopfanordnung zum Bearbeiten von Daten auf dem Magnetstreifen (7),
- wobei der Magnetkopf (11) der Magnetkopfanordnung stationär angeordnet ist zum Verarbeiten von Daten auf dem Magnetstreifen (7),
- wobei der Magnetstreifen (7) parallel zur Transportrichtung (T) des Sparbuchs durch den Drucker angeordnet ist,
**gekennzeichnet durch** einen zweiten Magnetkopf (12), der senkrecht zur Transportrichtung (T) verschieblich geführt ist zum Verarbeiten von Daten auf einem senkrecht zur Transportrichtung (T) des Sparbuchs ausgerichteten Magnetstreifen (6).

2. Drucker nach Anspruch 1, **dadurch gekennzeichnet, dass** der stationäre Magnetkopf (11) zwischen Andruckrollen (4) des Druckers angeordnet ist.

3. Drucker nach einem der vorstehenden Ansprüche, **dadurch gekennzeichnet, dass** der stationäre Magnetkopf (11) sich über die Ebene (E) der Transportbahn (2) hinaus erstreckt.

## Claims

1. Printer for savings books (5) with a magnetic strip (7), having
- a transport path (2) with transport rollers (3) for transporting the savings book (5), and
- at least one magnetic head arrangement for processing data on the magnetic strip (7),
- the magnetic head (11) of the magnetic head arrangement being arranged in a stationary manner in order to process data on the magnetic strip (7),
- the magnetic strip (7) being arranged parallel to the transport direction (T) of the savings book through the printer,
**characterized by** a second magnetic head (12), which is guided such that it can be displaced at right angles to the transport direction (T) in order to process data on a magnetic strip (6) oriented at right angles to the transport direction (T) of the savings book.

2. Printer according to Claim 1, **characterized in that** the stationary magnetic head (11) is arranged between pressure rollers (4) of the printer.

3. Printer according to one of the preceding claims, **characterized in that** the stationary magnetic head (11) extends beyond the plane (E) of the transport path (2).

## Revendications

1. Imprimante pour des livrets de caisse d'épargne (5) comprenant une bande magnétique (7) avec
- une bande de transport (2) avec des galets de transport (3) pour le transport du livret de caisse d'épargne (5) et
- au moins un dispositif à tête magnétique pour le traitement de données sur la bande magnétique (7),
- la tête magnétique (11) du dispositif à tête magnétique étant disposée de façon fixe pour le traitement de données sur la bande magnétique (7),
- la bande magnétique (7) étant disposée parallèlement au sens de transport (T) du livret de caisse d'épargne dans l'imprimante,
**caractérisée par** une seconde tête magnétique (12), qui est guidée de façon coulissante perpendiculairement au sens de transport (T) pour le traitement de données sur une bande magnétique (6) orientée perpendiculairement au sens de transport (T) du livret de caisse d'épargne.

2. Imprimante selon la revendication 1, **caractérisée en ce que** la tête magnétique (11) fixe est disposée entre des galets de pression (4) de l'imprimante.

3. Imprimante selon l'une des revendications précédentes, **caractérisée en ce que** la tête magnétique (11) fixe s'étend au-delà du plan (E) de la bande de transport (2).
